(19) Europäisches Patentamt
European Patent Office
Office européen des brevets

(11) **EP 2 736 700 B1**

(12) **EUROPÄISCHE PATENTSCHRIFT**

(45) Veröffentlichungstag und Bekanntmachung des Hinweises auf die Patenterteilung:
**08.08.2018   Patentblatt 2018/32**

(21) Anmeldenummer: **12740125.5**

(22) Anmeldetag: **20.07.2012**

(51) Int Cl.:
*B29C 65/16* (2006.01)        *B29C 65/82* (2006.01)
*G01N 21/17* (2006.01)        *G01N 21/958* (2006.01)

(86) Internationale Anmeldenummer:
**PCT/EP2012/064244**

(87) Internationale Veröffentlichungsnummer:
**WO 2013/014068 (31.01.2013 Gazette 2013/05)**

(54) **VORRICHTUNG UND VERFAHREN ZUR DURCHFÜHRUNG UND ÜBERWACHUNG EINES KUNSTSTOFF-LASERDURCHSTRAHL-SCHWEISSPROZESSES**

DEVICE AND METHOD FOR CARRYING OUT AND MONITORING A PLASTIC LASER TRANSMISSION WELDING PROCESS

DISPOSITIF ET PROCÉDÉ D'EXÉCUTION ET DE SURVEILLANCE D'UN PROCESSUS DE SOUDAGE DE MATIÈRE SYNTHÉTIQUE PAR FAISCEAU LASER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.07.2011   DE 102011079739**

(43) Veröffentlichungstag der Anmeldung:
**04.06.2014   Patentblatt 2014/23**

(73) Patentinhaber: **LPKF Laser & Electronics AG
30827 Garbsen (DE)**

(72) Erfinder:
• **SIEBEN, Manuel
  90768 Fürth-Vach (DE)**
• **HERTLE, Dominik
  91054 Erlangen (DE)**

(74) Vertreter: **Rau, Schneck & Hübner
Patentanwälte Rechtsanwälte PartGmbB
Königstraße 2
90402 Nürnberg (DE)**

(56) Entgegenhaltungen:
**DE-A1-102007 051 688     DE-C2- 10 121 923**

**Beschreibung**

Die Erfindung betrifft eine Vorrichtung und ein Verfahren zur Durchführung und Überwachung eines Kunststoff-Laserdurchstrahl-Schweißprozesses mit den im Oberbegriff des Anspruches 1 bzw. 11 angegebenen Merkmalen.

Die Technik des Kunststoff-Laserdurchstrahl-Schweißens ist aus vielerlei Druckschriften, beispielsweise der EP 1 575 756 B1 oder DE 10 2004 036 576 B4 bekannt.

Grundsätzlich wird dabei ein für die Laser-Verarbeitungsstrahlung transmissiver Fügepartner auf einen diese Strahlung absorbierenden Fügepartner gesetzt. Durch Bestrahlung einer entsprechenden Fügezone zwischen den beiden Fügepartnern durch den transmissiven Fügepartner hindurch wird im absorbierenden Fügepartner eine Schmelze erzeugt. Über den Kontakt mit dem transmissiven Fügepartner wird entsprechend Wärmeenergie in diesen transportiert, womit auch der transmissive Fügepartner in der Fügezone aufschmilzt und eine entsprechende Materialdurchmischung zwischen beiden Fügepartnern erfolgt. Durch ihr Abkühlen wird eine Schweißnaht zwischen beiden Fügepartnern gebildet, die quer zur Schweißnahtrichtung eine Art Linsenkontur aufweist. Die Grenzfläche dieser Linsenkontur zu ihrer Umgebung in den Fügepartnern stellt auf Grund der unterschiedlichen Brechzahlen der beiden Fügepartner und des Mischmaterials im Bereich der Schweißnaht eine optisch aktive Grenzfläche dar, an der ein Lichtstrahl reflektiert werden kann.

Ein Verfahren zum Herstellen und zur Kontrolle einer Schweißnaht mittels Laserstrahlung gemäß der DE 101 21 923 C2 macht sich diesen Umstand dahingehend zu Nutze, dass eine dort so bezeichnete Kontrollstrahlung in eine die Schweißnaht umfassende Messzone eingebracht und die von der Grenzfläche reflektierte Messstrahlung einer Detektionseinheit zur Erfassung zugeführt wird.

Bei dieser vorbekannten Kontrolle der Schweißnaht wird lediglich die durch eine fehlerhafte Naht sich ergebende Störung der erfassten reflektierten Messstrahlung festgestellt, was schlechthin Reaktionen auslösen soll. Im Wesentlichen kann eine solche Reaktion die Aussonderung eines als fehlerhaft erkannten Werkstückes sein. Genauere Aussagen über die Schweißnaht werden bei diesem Überwachungsverfahren nicht getroffen.

Davon ausgehend liegt der Erfindung die Aufgabe zu Grunde, eine Vorrichtung und ein Verfahren zur Durchführung und Überwachung eines Kunststoff-Laserdurchstrahl-Schweißprozesses anzugeben, bei der die Grenzfläche der Schweißnaht zu ihrer Umgebung in den Fügepartnern mit deutlich verbesserter Signifikanz erfasst werden kann.

Diese Aufgabe wird in vorrichtungstechnischer Hinsicht durch die im Kennzeichnungsteil des Anspruches 1 angegebenen Merkmale sowie in verfahrenstechnischer Hinsicht durch die kennzeichnenden Merkmale des Anspruches 11 gelöst. Demnach sind Vorrichtung und Verfahren derart ausgelegt, dass die von der Detektionseinheit erfasste reflektierte Messstrahlung so einer entsprechenden Auswertung zugeführt wird, dass eine Bestimmung der Tiefenposition der Grenzfläche in den Fügepartnern aus der erfassten reflektierten Messstrahlung erfolgt. Damit ist eine deutlich genauere Erfassung des Schweißprozesses möglich, da aus dieser Tiefenposition der Grenzfläche auf die absolute Tiefenlage der Schweißnaht in der Fügezone zwischen den beiden Fügepartnern genauso geschlossen werden kann, wie auf eine ausreichende Querschnittsfläche der Schweißnaht zwischen den beiden Fügepartnern oder dem Vorhandensein einer Schweißnaht schlechthin.

Für die konkrete optisch-technische Umsetzung der Bestimmung der Tiefenposition der Grenzfläche - im Folgenden kurz mit "Schweißtiefenüberwachung" bezeichnet - sind verschiedene vorrichtungs- und verfahrenstechnische Konzepte möglich. So ist gemäß Anspruch 2 bzw. 12 vorzugsweise die Verwendung einer Punktlichtquelle zur Erzeugung der Messstrahlung vorgesehen, die mit einer im Strahlengang des Messstrahls angeordneten Fokussieroptik variabel auf die Messzone fokussierbar ist. Mittels eines Fotodetektors als Detektiereinheit wird die Intensität des reflektierten Messstrahls erfasst, die von der Lage des Fokus relativ zur Grenzfläche abhängig ist. Liegt der Fokus in der Grenzfläche, ist die Reflektionsintensität hoch. Insoweit kann also aus der Korrelation zwischen der Position der Fokussieroptik und der Intensität des reflektierten Messstrahles die Tiefenposition der Grenzfläche bestimmt werden.

In einer weiteren alternativen Ausführungsform der Bestimmung der Tiefenposition gemäß den Ansprüchen 4 bis 7 bzw. 13 kann mit einem chromatischen, konfokalen Messsystem gearbeitet werden. Dabei ist die Messstrahlquelle als polychromatische Punktlichtquelle ausgebildet, die mit einer im Strahlengang des Messstrahls angeordneten, wellenlängenabhängig in mehrere Teilmessstrahlen fokussierenden Fokussieroptik abstandskodiert auf die Messzone fokussierbar ist. Ein spektralempfindlicher Fotodetektor erfasst als Detektiereinheit den von der Lage des Fokus relativ zur Grenzfläche abhängigen, intensitätsstärksten reflektierten Teilmessstrahl und bestimmt daraus die Tiefenposition der Grenzfläche. Zur Abstandskodierung der Teilmessstrahlen kann dabei eine insbesondere als Fresnel-Linse ausgeführte Abstandskodierlinse vorgesehen sein. In einer bevorzugten Ausführungsform gemäß Anspruch 6 kann der spektralempfindliche Fotodetektor ferner durch ein Spektrometer mit vorgesetzter Lochblende gebildet sein.

Zur Vereinfachung der Strahlführung von Bearbeitungs- und Messstrahl ist gemäß der bevorzugten Ausführungsform nach Anspruch 7 vorgesehen, den Messstrahl zur Fokussieroptik und den reflektierten Messstrahl zur Detektionseinheit jeweils über einen Lichtwellenleiter zu führen, die durch einen Faserkoppler zu einem gemeinsamen Strahlengang in der Fokussieroptik und der Messzone kombiniert sind.

Eine weitere Alternative für das optische System zur Schweißtiefenüberwachung ist in den Ansprüchen 8 bzw. 14 charakterisiert. Demnach wird eine an sich bekannte Triangulationsanordnung von Messstrahlquelle und Detektionseinheit eingesetzt. Demnach wird die Messstrahlung durch einen in die Messzone eingestrahlten Triangulationslaserstrahl gebildet, dessen von der Tiefenposition der Grenzfläche abhängig reflektierte Messstrahlung von einem Bildsensor als Detektionseinheit erfasst wird. Daraus wird die Tiefenposition der Grenzfläche nach dem Prinzip der Lasertriangulation bestimmt.

Ein ähnliches alternatives optisches Prinzip ist das sogenannte Lichtschnittverfahren, das als weitere Alternative in den Ansprüchen 9 bzw. 15 angegeben ist. Demnach ist ein Lichtschnittsensor vorgesehen, der die Messstrahlquelle und die Detektionseinheit aufweist. Die Messstrahlquelle ist dabei so ausgelegt, dass sie eine Mess-Lichtlinie auf die Messzone, also die zu überprüfende Schweißnaht projiziert. Eine Abbildungsoptik im Lichtschnittsensor bildet das reflektierte Messbild der Mess-Lichtlinie auf einen entsprechenden Bildsensor ab, durch dessen Auswertung wiederum die Tiefenposition der Grenzfläche zwischen Schweißnaht und Umgebung in den Fügepartnern nach dem Prinzip des Lichtschnittverfahrens bestimmt werden kann.

Wie in den Ansprüchen 10 und 16 angegeben ist, kann die erfindungsgemäße Schweißtiefenüberwachung in besonders vorteilhafter Weise bei einem sogenannten Laser-Hybridschweißen eingesetzt werden, wie es aus der eingangs erwähnten EP 1 575 756 B1 bekannt ist. Die dortige Sekundärstrahlquelle kann dann als Messstrahlquelle im Rahmen der vorliegenden Schweißtiefenüberwachung eingesetzt werden.

Zusammenfassend ist auf Grund der vorliegenden Erfindung eine Prozessüberwachung beim Kunststoff-Laserdurchstrahl-Schweißen besonders in Verbindung mit den Konturschweißen oder dem Laser-Hybridschweißen möglich, deren Grundprinzip auf der Lichtreflektion an Materialgrenzflächen und der sich daraus ergebenden "Tiefenmessung" der Schweißnaht-Grenzfläche beruht.

Weitere Merkmale, Einzelheiten und Vorteile der Erfindung ergeben sich aus der nachfolgenden Beschreibung von Ausführungsbeispielen an Hand der beigefügten Zeichnungen. Es zeigen:

Fig. 1     eine schematische Darstellung einer optischen Messvorrichtung für eine Schweißtiefenüberwachung in einer ersten Ausführungsform,

Fig. 2     eine schematische Darstellung der dabei eingesetzten, verschiebbaren Fokussieroptik,

Fig. 3     eine schematische Darstellung einer optischen Messeinrichtung zur Schweißtiefenüberwachung in einer zweiten Ausführungsform,

Fig. 4     eine schematische Darstellung einer dabei verwendeten, abstandskodierenden Fokussieroptik,

Fig. 5 und 6     eine detailliertere Darstellung der optischen Messeinrichtung gemäß Fig. 3 vor und nach erfolgter Schweißung zwischen den beiden Fügepartnern,

Fig. 7     eine alternative Ausführungsform für die optische Messeinrichtung gemäß Fig. 3,

Fig. 8 und 9     schematische Darstellungen einer Vorrichtung zur Durchführung und Schweißtiefenüberwachung bei einem KunststoffLaserdurchstrahl-Schweißprozess in einer weiteren Ausführungsform basierend auf dem Lasertriangulationsverfahren und

Fig. 10     eine schematische Perspektivdarstellung einer Vorrichtung zur Durchführung und Überwachung eines KunststoffLaserdurchstrahl-Schweißprozesses in einer weiteren Ausführungsform basierend auf dem Lichtschnittverfahren.

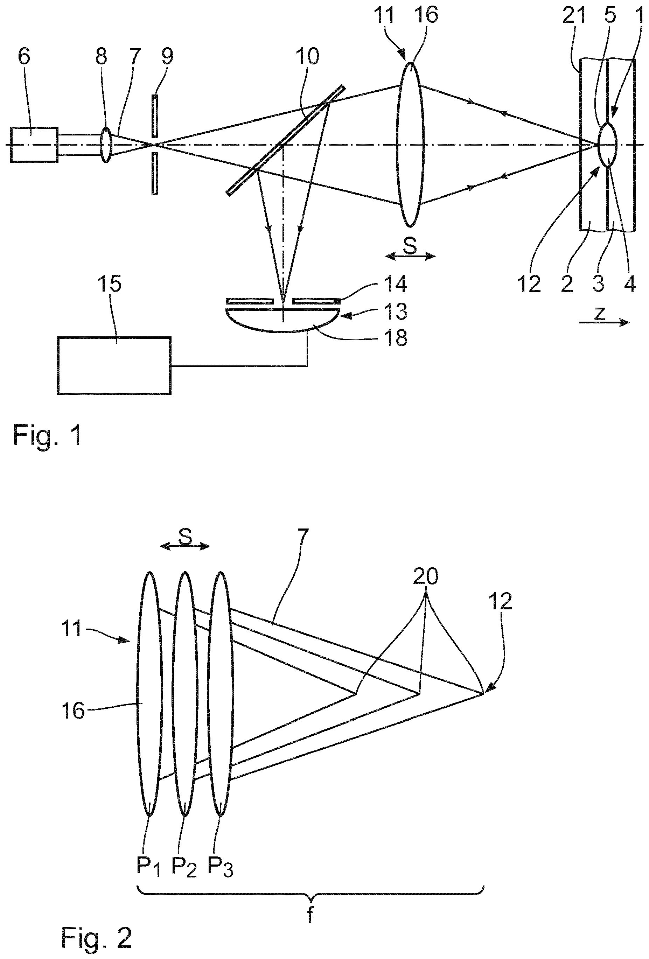

In Fig. 1 ist eine erste Ausführungsform für eine Vorrichtung zur Durchführung und Überwachung eines Kunststoff-Laserdurchstrahl-Schweißprozesses gezeigt. Die Bearbeitungsstrahlquelle zur Erzeugung und zum Aussenden eines Laserstrahls als Bearbeitungsstrahlung für die Fügezone 1 der beiden Fügepartner 2, 3 ist dabei nicht näher dargestellt, da dies dem üblichen Laserdurchstrahl-Schweißen entspricht. Mit Hilfe dieser Bearbeitungsstrahlquelle wird eine in Fig. 1 zwischen den beiden Fügepartnern 2, 3 im Querschnitt angedeutete Schweißnaht 4 zwischen den beide Fügepartnern 2, 3 gebildet.

Zur Bestimmung der Tiefenposition der Grenzfläche 5 zwischen der Schweißnaht 4 und dem Fügepartner 2 - also zur Schweißtiefenüberwachungen des entsprechenden Laserdurchstrahl-Schweißprozesses - ist eine Messstrahlquelle 6 in Form einer Punktlichtquelle vorgesehen, deren Messstrahl 7 durch eine Linse 8 und eine Lochblende 9 aufbereitet und durch einen Strahlteiler 10 über eine Fokussieroptik 11 als fokussierter Strahl in die Messzone 12 im Bereich der Schweißnaht 4 eingestrahlt wird. Der entsprechende Fokusfleck des Messstrahls 7 wird dabei von der optisch wirksamen Grenzfläche 5 zwischen Schweißnaht 4 und Fügepartner 2 reflektiert und über die Fokussieroptik 11 und den Strahlteiler 10 in eine Detektionseinheit 13 über eine Lochblende 14 abgebildet. Bei der Detektionseinheit 13 handelt es sich in diesem gezeigten Fall um einen Fotodetektor, der mit einer entsprechenden Auswerteeinheit 15 gekoppelt ist. Das Messprinzip für die Tiefenposition der Grenzfläche 5 beruht nun darauf, dass bei einer Lage der Grenzfläche 5 in der Fokusebene die Messstrahlquelle 6 scharf auf die Detektionseinheit 13 abgebildet und damit dort eine hohe Lichtintensität hervorgerufen wird. Ist die Grenzfläche 5 außerhalb der Fokusebene, so wird die Messstrahlquelle 6 unscharf mit entsprechend geringerer Intensität auf den Fotodetektor der Detektionseinheit 13 abgebildet. Eine Abstandsmessung ist nur durch eine variable Fokussierung des Messstrahls 7 in die Messzone 12 realisierbar, wie dies in Fig. 2 dargestellt ist. Demnach wird die Fokussieroptik 11 in einer Scanbewegung S verfahren, wobei die Tiefenposition der Grenzfläche 5 mit einer der Scanpositionen $P_1$, $P_2$, $P_3$ der Fokussieroptik 11 korreliert ist. Die Intensität ändert sich dabei mit dem Abstand z zwischen der Fokusebene und der Grenzfläche gemäß der folgenden Point-Spread-Function:

$$I(z) = \frac{\Phi}{\left[\tan(\alpha) \times Z \times rf\right] \times \pi}$$

Definition:

$\alpha$ = Divergenzwinkel
$\Phi$ = Lichtfluss ausgehend von Strahlquelle der Prozessüberwachung
$Z$ = Abstand der Reflexionsebene zur Fokuslage
$rf$ = Radius des Spots

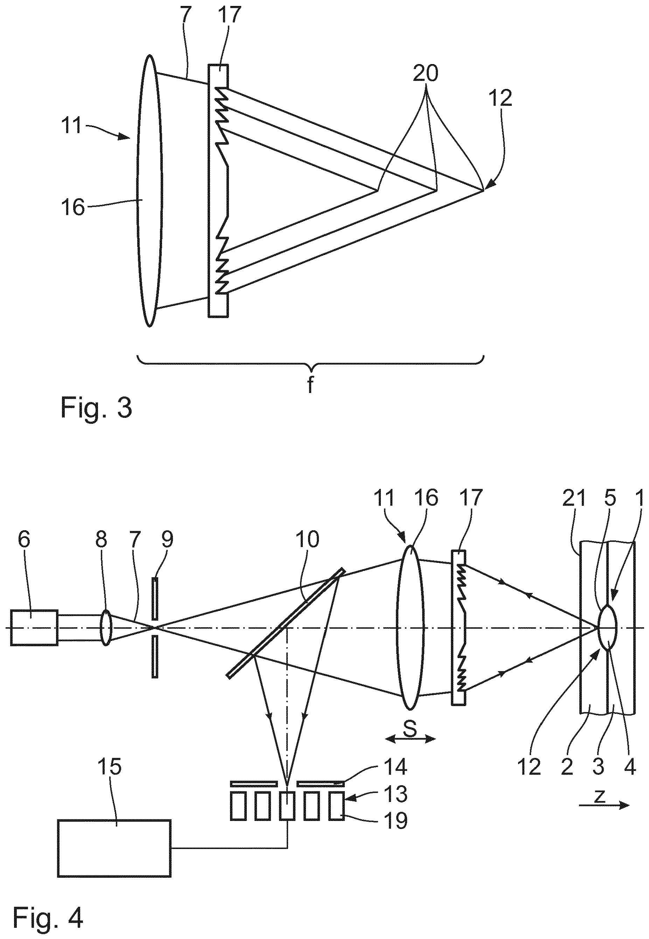

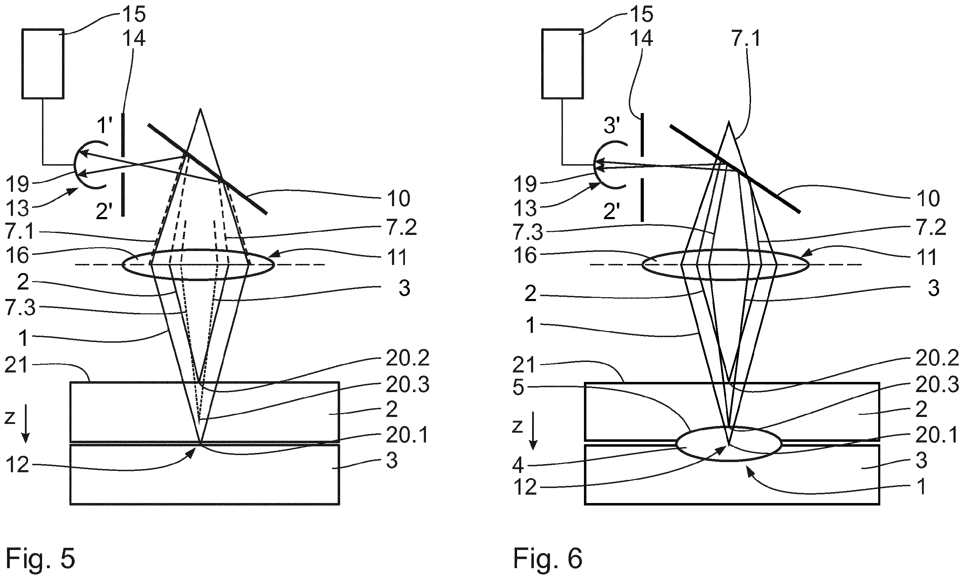

Anhand der Fig. 3 bis 6 ist eine weitere Ausführungsform einer Vorrichtung und eines Verfahrens zur Durchführung und Überwachung eines Kunststoff-Laserdurchstrahl-Schweißprozesses zu erläutern. Diese Variante hat mit der gemäß Fig. 1 und 2 die Messstrahlquelle 6, dessen Aufbereitung über eine Linse 8 und eine Lochblende 9 sowie den Strahlteiler 10 gemeinsam. Allerdings ist die Messstrahlquelle 6 eine polychromatische Punktlichtquelle, deren Messstrahl 7 wellenlängenabhängig in mehrere Teilmessstrahlen 7.1, 7.2, 7.3 (Fig. 5 und 6) in die Messzone 12 fokussiert wird. Hierzu wird die Dispersion der Fokussieroptik ausgenutzt. Die Fokussieroptik wird bei diesem Messaufbau aus einem Material hergestellt das eine hohe Abbesche Konstante besitzt und somit eine chromatische Abberation hervorruft. Dadurch wird, wie in Fig. 3 und 5 angedeutet ist, der Fokusabstand f des jeweiligen Brennpunktes von der Fokussieroptik 11 im Abstand chromatisch kodiert.

Als Detektionseinheit 13 ist bei dieser Ausführungsform ein spektralempfindlicher Fotodetektor in Form eines Spektrometers 19 hinter der Lochblende 14 angeordnet, mit dessen Hilfe sich der spektrale Intensitätsverlauf des reflektierten Messstrahles bestimmen lässt. Das Spektrometer 19 ermittelt die von der Lage des Fokus relativ zur Grenzfläche 5 abhängige, intensitätsstärkste reflektierte Wellenlänge 7. Die Auswerteeinheit 15 kann daraus wiederum die Tiefenposition der Grenzfläche 5 und damit die Tiefenlage der Schweißnaht 4 bestimmen.

Anhand von Fig. 5 und 6 ist dies nochmals genauer zu erläutern. So sind in Fig. 5 der transmissive Fügepartner 2 und der absorbierende Fügepartner 3 noch ohne Verschweißung miteinander gezeigt. Die wellenlängenabhängige Fokussierung des polychromatischen Messstrahls 7 führt zu verschiedenen exemplarischen Fokalpunkten 20.1, 20.2, 20.3, abhängig von der jeweiligen Wellenlänge $\lambda 1$, $\lambda 2$, $\lambda 3$ in z-Richtung (Tiefe) in den Fügepartnern 2, 3. Mit besonders hoher Intensität werden der der Wellenlänge $\lambda 1$ zugeordnete Strahl mit seinem Fokalpunkt 20.1 im Bereich der Grenzfläche zwischen den beiden Fügepartner 2, 3 sowie der Wellenlänge $\lambda 2$ zugeordnete Teilmessstrahl 7.2 mit dem Fokalpunkt 20.2 auf der äußeren Oberfläche 21 des oberen Fügepartners 2 reflektiert. Dies kann das Spektrometer 19 entsprechend messen, wie durch die dort auftreffenden reflektierten Teilmessstrahlen 7.1 mit der Wellenlänge $\lambda 1'$ und 7.2 mit der Wellenlänge $\lambda 2'$ gezeigt ist. Mit der Auswerteeinheit 15 werden daraus die entsprechenden Positionen der Grenzfläche 5 zwischen den beiden Fügepartnern 2, 3 und der Oberfläche 21 des oberen Fügepartners 2 bestimmt.

Nach erfolgter Schweißung und der entsprechend angelegten Schweißnaht 4, wie dies in Fig. 6 angedeutet ist, wird nunmehr der Teilmessstrahl 7.3 mit seinem Fokalpunkt 20.3 in der nach oben in den transmissiven Fügepartner 2 gewanderten Grenzfläche 5 liegen und somit mit besonders hoher Intensität reflektiert. Am Spektrometer 19 wird eine entsprechende Intensitätsverschiebung gemessen. Die Tiefenposition der Grenzfläche 5 zwischen Schweißnaht 4 und oberen Fügepartner 2 kann nun über die Wellenlänge des maximal reflektierten Teilmessstrahles 7.3 bestimmt werden.

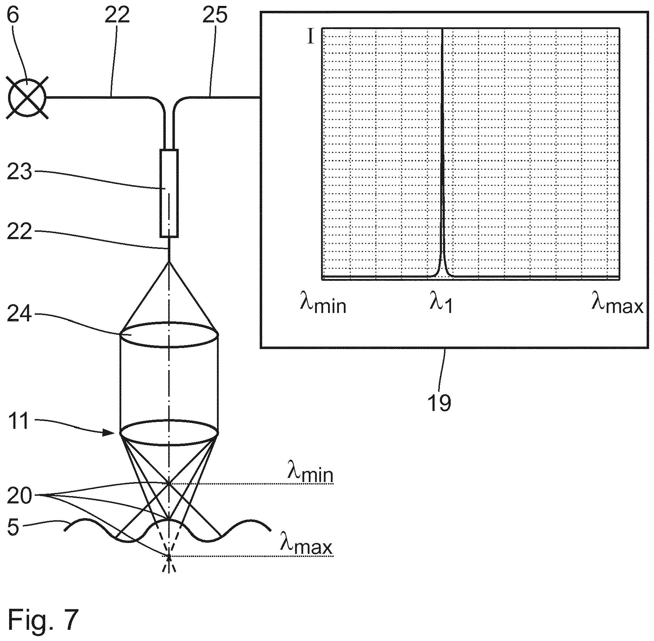

Im Fig. 7 ist eine gegenüber Fig. 1 bzw. 4 etwas abgewandelte Variante der Messvorrichtung gezeigt. Der Messstrahl wird dabei von der Messstrahlquelle 6 über einen ersten Lichtleiter 22, in den ein Faserkoppler 23 eingesetzt ist, zu einer Kollimationslinse 24 und einer wiederum wellenlängenabhängig fokussierenden Fokussieroptik 11 geführt. Die reflektierten Messstrahlen 7 werden über diese optische Anordnung entsprechend abgebildet und über den Faserkoppler 23 und einen weiteren Lichtwellenleiter 25 zu dem Spektrometer 19 geführt. In Fig. 7 ist ein Spektraldiagramm der reflektierten Messstrahlung 7 mit einem Intensitätsmaximum bei der Wellenlänge $\lambda 1$ gezeigt. Aus dieser Wellenlänge kann die Lage der Grenzfläche 5 in z-Richtung innerhalb der Grenzen bestimmt werden, die durch die minimale Wellenlänge $\lambda_{min}$ und maximale Wellenlänge $\lambda_{max}$ der polychromatischen Messstrahlung 7 gesetzt sind.

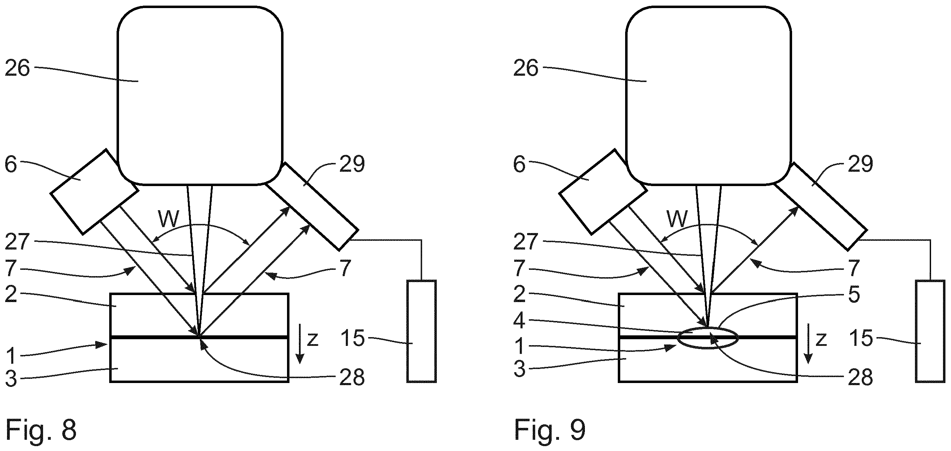

In den Fig. 8 und 9 ist eine weitere Variante einer Vorrichtung und eines entsprechenden Verfahrens zur Durchführung und Überwachung eines Kunststoff-Laserdurchstrahl-Schweißprozesses gezeigt. In dieser diagrammartigen Darstellung ist eine Bearbeitungsstrahlquelle 26 in Form einer üblichen Laserbearbeitungsoptik dargestellt, die einen Bearbeitungsstrahl 27 in die Fügezone 28 zwischen dem transmissiven Fügepartner 2 und dem absorbierendem Fügepartner 3 einstrahlt. Dadurch wird die in Fig. 9 gezeigte Schweißnaht 4 mit Ihrer Grenzfläche 5 zum transmissiven Fügepartner 2 hin gebildet.

Die entsprechende Überwachung der Schweißnaht 4 in Form einer Schweißtiefenüberwachung erfolgt bei der hier gezeigten Ausführungsform auf der Basis einer Triangulationsanordnung, die aus einer Laserquelle als Messstrahlquelle 6 und einem entsprechend gegenüber angeordneten Empfänger in Form eines Bildsensors 29 - ein sogenannter CCD-Stack - als Detektionseinheit 13 angeordnet ist. Zum Hintergrund ist kurz festzuhalten, dass bei der Triangulation im Allgemeinen eine Abstandsmessung unter Ausnutzung der geometrischen Zusammenhänge in einem Dreieck durchgeführt wird. Umgesetzt wird diese Technik mit Hilfe eines Laserstrahls, der unter einem bestimmten Winkel auf eine reflektierende Fläche geleitet wird. Der durch direkte Reflexion zurückfallende Strahl trifft auf ein CCD-Array, welches eindimensional die Intensitätsverteilung aufnimmt. Der Winkel, unter dem der Laserstrahl auf die Messstelle trifft, wird konstant gehalten, bei einer Veränderung des Abstandes kommt es daher zu einer "horizontalen" Verschiebung auf dem CCD-Stack. Durch Ermittlung der Position und durch Berücksichtigung der Winkelzusammenhänge kann die Auswertelektronik den Abstand zwischen Sensor und Messstelle berechnen.

Da die bei der Laserdurchstrahl-Schweißung entstehende Schweißlinse der Schweißnaht 4 zu einer Vermischung der Grundmaterialien der Fügepartner 2, 3 führt, kann auch hier wiederum eine Messung des reflektierten Messstrahls 7 an der Grenzfläche 5 erfolgen. Dazu wird der Laser-Messstrahl 7 unter einen definierten Winkel W in das Material eingekoppelt. Mittels des als CCD-Stack ausgeführten Bildsensors 29 wird dann die Position des reflektieren Lichtstrahls ermittelt und ausgewertet. Aus den Winkelzusammenhängen und - falls notwendig - aus den Brechungsverhältnissen der Fügepartner 2, 3 kann dann die jeweilige Schichtdicke zwischen Oberfläche und Grenzfläche 5 und damit die Tiefenlage der Schweißnaht 4 bestimmt werden.

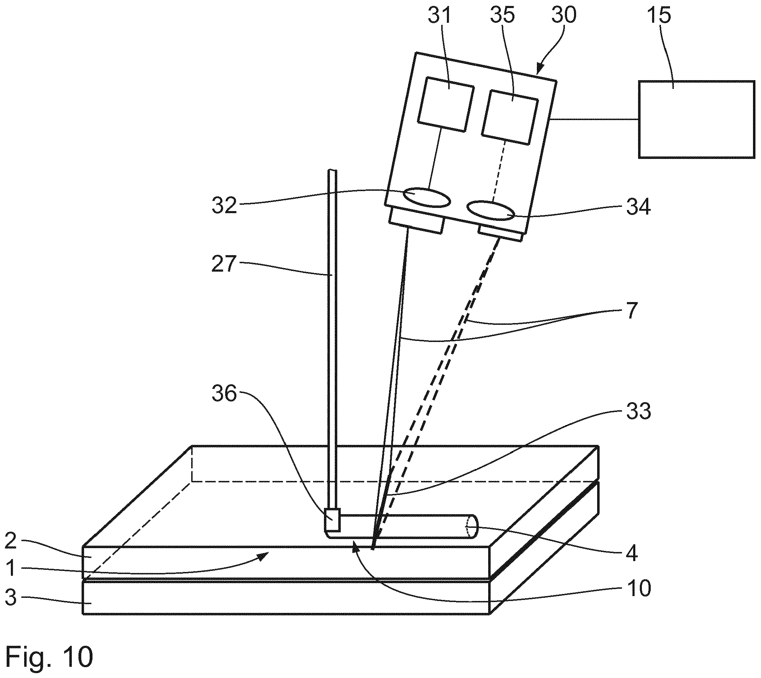

Eine Fortbildung der auf einer Lasertriangulation beruhenden Schweißtiefenbestimmung stellt die in Fig. 10 gezeigte Variante der Erfindung dar. Hierbei wird ein sogenannter Lichtschnitt-Sensor 30 eingesetzt, der zum einen eine Laserdiode 31 mit einer speziellen Aufbereitungsoptik 32 aufweist. Damit wird eine Mess-Lichtlinie 33 auf das zu untersuchende Objekt projiziert.

Zum anderen ist im Lichtschnitt-Sensor 30 eine weitere Abbildungsoptik 34 angeordnet, mit der das von den Fügepartnern 2,3 diffus reflektierte Licht der Lichtlinie 33 auf eine Sensor-Matrix 35 wie beispielsweise eine CCD- oder CMOS-Matrix, als Detektionseinheit 13 abgebildet wird. Eine entsprechende Auswerteeinheit 15 in Form eines Controllers errechnet aus dem Kamerabild die entsprechende Abstandsinformationen, also die Lage eines entsprechenden Reflexionspunktes in z-Richtung sowie die Position entlang der Messlinie 33 (x-Achse). Damit kann das Höhenprofil des Messobjekts, das das Profil der Schweißnaht 4 in x-Richtung repräsentiert, in einem entsprechenden zweidimensionalen Koordinatensystem ausgegeben werden.

Wie in Fig. 10 erkennbar ist, kann mit diesem Messverfahren hinter der "frisch" mit Hilfe des Bearbeitungsstrahls 27 angelegten Schweißnaht 4 eine entsprechende Überwachung deren Tiefenlage und Kontur erfolgen. Sollten dabei Abweichungen von den Normwerten gemessen werden, kann der Bearbeitungsstrahl 27 entsprechend in seinen Parametern verändert werden, um das Schmelzbad 36 zwischen den beiden Fügepartnern 2, 3 und damit die Schweißnaht 4 entsprechend zu beeinflussen.

Insgesamt kann bei einer Bewegung des Bearbeitungsstrahls 27 zusammen mit dem Lichtschnitt-Sensor 30 entlang der zu verbindenden Fügepartner 2, 3 in y-Richtung eine dreidimensionale Erfassung der Schweißnaht 4 stattfinden. Das gleiche Ergebnis wird erzielt, wenn die Fügepartner 2, 3 relativ zum Bearbeitungsstrahl 27 und dem Lichtschnitt-Sensor 30 bewegt werden.

Insgesamt kann mit Hilfe der erfindungsgemäßen Schweißtiefenuntersuchung aus den jeweiligen Reflektionen des Messstrahls 7 sowohl das Einhalten von geforderten Maßen messtechnisch erfasst, als auch die Schweißnahtqualität generell überwacht werden.

**Patentansprüche**

1.  Vorrichtung zur Durchführung und Überwachung eines Kunststoff-Laserdurchstrahl-Schweißprozesses, umfassend

    - eine Bearbeitungsstrahlquelle (27) zum Aussenden einer Bearbeitungsstrahlung (26) in eine Fügezone (1) zwischen zwei Fügepartnern (2, 3) unter Bildung einer Schweißnaht (4),
    - eine Messstrahlquelle (6) zur Bestrahlung einer Messzone (12) mit einer Messstrahlung (7), und
    - eine Detektionseinheit (13) zur Erfassung der von einer Grenzfläche (5) zwischen Schweißnaht (4) und ihrer Umgebung in den Fügepartnern (2 3) reflektierten Messstrahlung (7),

    **gekennzeichnet durch**

    - eine mit der Detektionseinheit (13) verbundene Auswerteinheit (15) zur Bestimmung der Tiefenposition der Grenzfläche (5) in den Fügepartnern (2, 3) aus der erfassten reflektierten Messstrahlung (7).

2. Vorrichtung nach Anspruch 1, **dadurch gekennzeichnet, dass** die Messstrahlquelle (6) eine Punktlichtquelle ist, die mit einer im Strahlengang des Messstrahls (7) angeordneten Fokussieroptik (11) variabel auf die Messzone (12) fokussierbar ist, wobei ein Photodetektor (18) als Detektiereinheit die von der Lage des Fokus (20) relativ zur Grenzfläche (5) abhängige Intensität des reflektierten Messstrahles (7) erfasst.

3. Vorrichtung nach Anspruch 2, **dadurch gekennzeichnet, dass** die Fokusoptik (11) zur intensitätsgesteuerten Nachführung des Messstrahl-Fokus (20) relativ zur Grenzfläche (5) in Richtung der optischen Achse verschiebbar angeordnet ist, wobei aus der Position der Fokusoptik (11) die Tiefenposition der Grenzfläche (5) bestimmbar ist.

4. Vorrichtung nach Anspruch 1, **dadurch gekennzeichnet, dass** die Messstrahlquelle (6) eine polychromatische Punktlichtquelle ist, die mit einer im Strahlengang des Messstrahls (7) angeordneten, hoch dispersen Fokussieroptik wellenlängenabhängig abstandskodiert auf die Messzone (12) fokussierbar ist, wobei ein spektral empfindlicher Photodetektor (18) als Detektiereinheit den von der Lage des Fokus (20) relativ zur Grenzfläche (5) abhängigen, intensitätsstärksten reflektierten Teilmessstrahl (7) erfasst und daraus die Tiefenposition der Grenzfläche (5) bestimmt.

5. Vorrichtung nach Anspruch 4, **dadurch gekennzeichnet, dass** die Fokussieroptik (11) eine Fokussierlinse (16) und eine insbesondere als Fresnel-Linse ausgeführte Abstandskodierlinse (17) aufweist.

6. Vorrichtung nach Anspruch 4 oder 5, **dadurch gekennzeichnet, dass** der spektral empfindliche Photodetektor (18) durch ein Spektrometer mit vorgesetzter Lochblende (9) gebildet ist.

7. Vorrichtung nach einem der Ansprüche 4 bis 6, **dadurch gekennzeichnet, dass** der Messstrahl (7) zur Fokussieroptik (11) und der reflektierte Messstrahl (7) zur Detektionseinheit (13) über jeweils einen Lichtwellenleiter (25) geführt sind, die durch einen Faserkoppler (23) zu einem gemeinsamen Strahlengang in der Fokussieroptik (11) und der Messzone (12) kombiniert sind.

8. Vorrichtung nach Anspruch 1, **dadurch gekennzeichnet, dass** die Messstrahlquelle (6) und Detektionseinheit (13) in einer Triangulationsanordnung relativ zueinander angeordnet sind.

9. Vorrichtung nach Anspruch 1, **dadurch gekennzeichnet, dass** ein Lichtschnitt-Sensor (30) mit der Messstrahlquelle (6) und der Detektionseinheit (13) vorgesehen ist, wobei

   - die Messstrahlquelle (6) derart ausgelegt ist, dass sie ein Mess-Lichtlinie (33) auf die Messzone (12) projiziert, und
   - eine Abbildungsoptik (34) für das reflektierte Messbild der Mess-Lichtlinie (33) auf einen als Detektionseinheit (13) fungierenden Bildsensor vorgesehen ist.

10. Vorrichtung nach einem der vorgenannten Ansprüche, **dadurch gekennzeichnet, dass** die Messstrahlquelle (6) eine Sekundärstrahlquelle einer an sich bekannten Vorrichtung zum Laserstrahl-Hybridschweißen ist.

11. Verfahren zur Durchführung und Überwachung eines Kunststoff-Laserdurchstrahl-Schweißprozesses, umfassend die Schritte:

    - Anordnen eines transmissiven (2) und eines absorbierenden Fügepartners (3) in einer Fügestellung,
    - Bestrahlung der Fügepartner (2, 3) in einer Fügezone (1) mit einer Bearbeitungsstrahlung (27) unter Bildung einer Schweißnaht (4) und in einer die Schweißnaht (4) erfassenden Messzone (12) mit einer Messstrahlung (7), und
    - Erfassung der von einer Grenzfläche (5) zwischen Schweißnaht und Umgebung reflektierten Messstrahlung (7) mit einer Detektionseinheit (13),

    **gekennzeichnet durch**

    - eine Auswertung der erfassten Messstrahlung (7) mittels einer mit der Detektionseinheit (13) verbundenen Auswerteeinheit (15) unter Bestimmung der Tiefenposition der erfassten Grenzfläche (5) in den Fügepartnern (2, 3).

12. Verfahren gemäß Anspruch 11, **dadurch gekennzeichnet, dass** die Messstrahlung (7) von einer mittels einer Fokussieroptik (11) variabel fokussierbaren Punktlichtquelle (6) erzeugt wird, wobei die Tiefenposition der Grenzfläche (5) durch eine mit der Intensität der reflektierten Messstrahlung (7) korrelierten Position (P1, P2, P3) der Fokussieroptik (11) bestimmt wird.

13. Verfahren nach Anspruch 11, **dadurch gekennzeichnet, dass** die Messstrahlung (7) durch eine polychromatische Punktlichtquelle (6) erzeugt und wellenlängenabhängig fokussiert in die Messzone (12) eingestrahlt wird, wobei die korreliert mit der Tiefenposition der Grenzfläche reflektierte Messstrahlung (7) spektral erfasst und die Tiefenposition der Grenzfläche (5) durch Auswertung des spektralen Intensitätsmaximums der reflektierten Messstrahlung (7) bestimmt wird.

14. Verfahren nach Anspruch 11, **dadurch gekennzeichnet, dass** die Messstrahlung (7) durch einen in die Messzone (12) eingestrahlten Triangulationslaserstrahl gebildet wird, dessen von der Tiefenposition der Grenzfläche (5) abhängig reflektierte Messstrahlung (7) von einem Bildsensor (29) als Detektionseinheit erfasst und die Tiefenposition der Grenzfläche (5) nach dem Prinzip der Lasertriangulation bestimmt werden.

15. Verfahren nach Anspruch 11, **dadurch gekennzeichnet, dass** die Messstrahlung (7) derart ausgebildet wird, dass sie eine auf die Grenzfläche (5) projizierte Mess-Lichtlinie (33) erzeugt, deren reflektiertes Messbild als reflektierte Messstrahlung (7) von einem Lichtschnitt-Sensor (30) als Detektionseinheit erfasst und die Tiefenposition der Grenzfläche (5) daraus nach dem Prinzip des Lichtschnittverfahrens bestimmt wird.

16. Verfahren nach einem der Ansprüche 11 bis 15, **dadurch gekennzeichnet, dass** das Bestrahlen der Messzone (12) mittels einer Sekundärstrahlung bei einem Laserstrahl-Hybridschweißverfahren erfolgt.

**Claims**

1. Device for performing and monitoring a plastic laser transmission welding process, the device comprising

   - a processing beam source (27) for emitting a processing radiation (26) into a joining zone (1) between two joining members (2, 3) so that a weld seam (4) is formed;
   - a measuring beam source (6) for irradiating a measuring zone (12) with a measuring radiation (7); and
   - a detection unit (13) for detecting the measuring radiation (7) reflected by an interface (5) between the weld seam (4) and its surroundings in the joining members (2, 3),

   **characterized by**

   - an evaluation unit (15), which is connected to the detection unit (13) for determining the depth position of the interface (5) in the joining members (2, 3) from the detected reflected measuring radiation (7).

2. Device according to claim 1, **characterized in that** the measuring beam source (6) is a point light source, which is variably focusable onto the measuring zone (12) by means of a focusing optical system (11) arranged in the beam path of the measuring beam (7), wherein a photo detector (18) serving as detection unit detects the intensity of the reflected measuring beam (7) as a function of the position of the focus (20) relative to the interface (5).

3. Device according to claim 2, **characterized in that** the focusing optical system (11) is arranged so as to be displaceable in the direction of the optical axis for intensity-controlled adjustment of the measuring beam focus (20) relative to the interface (5), wherein the depth position of the interface (5) is determinable from the position of the focusing optical system (11).

4. Device according to claim 1, **characterized in that** the measuring beam source (6) is a polychromatic point light source, which is focusable, by means of a high-dispersion focusing optical system arranged in the beam path of the measuring beam (7), onto the measuring zone (12) so as to be distance-coded depending on the respective wavelength, wherein a spectral-sensitive photo detector (18) serving as detection unit detects the reflected partial measuring beam (7) with the highest intensity depending on the position of the focus (20) relative to the interface (5) so as to determine the depth position of the interface (5).

5. Device according to claim 4, **characterized in that** the focusing optical system (11) has a focusing lens (16) and a distance coding lens (17), which is in particular configured as a Fresnel lens.

6. Device according to claim 4 or 5, **characterized in that** the spectral-sensitive photo detector (18) is formed by a spectrometer with an aperture (9) arranged in front thereof.

7. Device according to any one of claims 4 to 6, **characterized in that** the measuring beam (7) is guided to the focusing optical system (11) and the reflected measuring beam (7) is guided to the detection unit (13) by in each case one optical waveguide (25) which are combined by a fiber coupler (23) to form a common beam path in the focusing optical system (11) and the measuring zone (12).

8. Device according to claim 1, **characterized in that** the measuring beam source (6) and the detection unit (13) are arranged relative to each other in a triangulation arrangement.

**9.** Device according to claim 1, **characterized in that** a light section sensor (30) comprising the measuring beam source (6) and the detection unit (13) is provided, wherein

- the measuring beam source (6) is configured in such a way that it projects a measuring light line (33) onto the measuring zone (12), and
- an imaging optical system (24) is provided for imaging the reflected image of the measuring light line (33) onto an image sensor serving as detection unit (13).

**10.** Device according to any one of the above claims, **characterized in that** the measuring beam source (6) is a secondary beam source of a device for laser beam hybrid welding known per se.

**11.** Method for performing and monitoring a plastic laser transmission welding process, comprising the following steps:

- arranging a transmissive (2) and an absorptive joining member (3) in a joining position;
- irradiating the joining members (2, 3) in a joining zone (1) with a processing radiation (27) so that a weld seam (4) is formed, and in a measuring zone (12) comprising the weld seam (4) with a measuring radiation (7); and
- detecting the measuring radiation (7) reflected by an interface (5) between the weld seam and its surroundings by means of a detection unit (13),

**characterized by**

- an evaluation of the detected measuring radiation (7) by means of an evaluation unit (15) connected to the detection unit (13) so as to determine the depth position of the detected interface (5) in the joining members (2, 3).

**12.** Method according to claim 11, **characterized in that** the measuring radiation (7) is generated by a point light source (6) which is variably focusable by means of a focusing optical system (11), wherein the depth position of the interface (5) is determined by means of a position (P1, P2, P3) of the focusing optical system (11) that is correlated with the intensity of the reflected measuring radiation (7).

**13.** Method according to claim 11, **characterized in that** the measuring radiation (7) is generated by a polychromatic point light source (6) and emitted into the measuring zone (12) with a focus that is a function of the respective wavelength, wherein the measuring radiation (7), which is reflected as a function of the depth position of the interface, is spectrally detected, and the depth position of the interface (5) is determined by evaluation of the spectral intensity maximum of the reflected measuring radiation (7).

**14.** Method according to claim 11, **characterized in that** the measuring radiation (7) is formed by a triangulation laser beam, which is emitted into the measuring zone (12), wherein the measuring radiation (7) thereof - which is reflected as a function of the depth position of the interface (5) - is detected by an image sensor (29) serving as detection unit and the depth position of the interface (5) is determined according to the principles of laser triangulation.

**15.** Method according to claim 11, **characterized in that** the measuring radiation (7) is formed in such a way that it generates a measuring light line (33) that is projected onto the interface (5), wherein the reflected measuring image thereof is detected as reflected measuring radiation (7) by a light section sensor (30) serving as detection unit, and the depth position of the interface (5) is determined from said reflected measuring radiation (7) according to the principles of the light section method.

**16.** Method according to any one of claims 11 to 15, **characterized in that** the measuring zone (12) is irradiated with a secondary radiation generated during laser beam hybrid welding.

**Revendications**

**1.** Dispositif d'exécution et de surveillance d'un processus de soudage de matière synthétique par irradiation laser, comprenant

- une source de faisceau de traitement (27) servant à émettre un rayonnement de traitement (26) dans une zone d'assemblage (1) entre deux éléments complémentaires d'assemblage (2, 3) en formant un cordon de soudure (4),
- une source de faisceau de mesure (6) servant à exposer une zone de mesure (12) à un rayonnement de mesure (7), et
- une unité de détection (13) servant à détecter le rayonnement de mesure (7) réfléchi par une interface (5) entre le cordon de soudure (4) et son environnement dans les éléments complémentaires d'assemblage (2, 3),

**caractérisé par**

- une unité d'évaluation (15) reliée à l'unité de détection (13) et servant à déterminer la position en profondeur de l'interface (5) dans les éléments complémentaires d'assemblage (2, 3) à partir du rayonnement de mesure (7) réfléchi détecté.

**2.** Dispositif selon la revendication 1, **caractérisé en ce que** la source de faisceau de mesure (6) est une source de lumière ponctuelle qui peut être focalisée de manière variable sur la zone de mesure (12) à l'aide d'une optique de focalisation (11) disposée dans la trajectoire du faisceau de mesure (7), un photodétecteur (18) faisant office d'unité de détection détectant l'intensité, dépendant de la position du foyer (20) par rapport à l'interface (5), du faisceau de mesure (7) réfléchi.

**3.** Dispositif selon la revendication 2, **caractérisé en ce que** l'optique de focalisation (11) est disposée de manière déplaçable dans la direction de l'axe optique pour l'ajustement, commandé par l'intensité, du foyer de faisceau de mesure (20) par rapport à l'interface (5), la position en profondeur de l'interface (5) pouvant être déterminée à partir de la position de l'optique de focalisation (11).

**4.** Dispositif selon la revendication 1, **caractérisé en ce que** la source de faisceau de mesure (6) est une source de lumière ponctuelle polychromatique qui peut être focalisée sur la zone de mesure (12) de manière indépendante de la longueur d'onde et codée en distance à l'aide d'une optique de focalisation hautement dispersive disposée dans la trajectoire du faisceau de mesure (7), un photodétecteur (18), sensible spectralement et faisant office d'unité de détection détectant le faisceau de mesure partiel (7) réfléchi de plus grande intensité, dépendant de la position du foyer (20) par rapport à l'interface (5), et déterminant à partir de celui-ci la position en profondeur de l'interface (5).

**5.** Dispositif selon la revendication 4, **caractérisé en ce que** l'optique de focalisation (11) comprend une lentille de focalisation (16) et une lentille de codage de distance (17) conçue en particulier comme une lentille de Fresnel.

**6.** Dispositif selon la revendication 4 ou 5, **caractérisé en ce que** le photodétecteur (18) sensible spectralement est formé par un spectromètre à diaphragme perforé (9) placé devant.

**7.** Dispositif selon l'une des revendications 4 à 6, **caractérisé en ce que** le faisceau de mesure (7) est guidé en direction de l'optique de focalisation (11) et le faisceau de mesure (7) réfléchi est guidé en direction de l'unité de détection (13) à chaque fois par le biais d'un guide d'ondes optiques (25), lesquels guides d'ondes optiques sont combinés par le biais d'un coupleur de fibres (23) pour former une trajectoire de faisceau commune dans l'optique de focalisation (11) et la zone de mesure (12).

**8.** Dispositif selon la revendication 1, **caractérisé en ce que** la source de faisceau de mesure (6) et l'unité de détection (13) sont disposées suivant une disposition de triangulation l'une par rapport à l'autre.

**9.** Dispositif selon la revendication 1, **caractérisé en ce qu'**il est prévu un capteur à coupe optique (30) comprenant la source de faisceau de mesure (6) et l'unité de détection (13),

- la source de faisceau de mesure (6) étant conçue de manière à projeter une ligne de lumière de mesure (33) sur la zone de mesure (12), et
- une optique de reproduction (34) destiné à l'image de mesure réfléchie de la ligne de lumière de mesure (33) étant prévue sur un capteur d'image fonctionnant comme une unité de détection (13).

**10.** Dispositif selon l'une des revendications précédentes, **caractérisé en ce que** la source de faisceau de mesure (6) est une source de faisceau secondaire d'un dispositif connu en soi de soudage hybride par faisceau laser.

**11.** Procédé d'exécution et de surveillance d'un processus de soudage de matière synthétique par irradiation laser, le procédé comportant les étapes consistant à :

- disposer un élément complémentaire d'assemblage transmissif (2) et un élément complémentaire d'assemblage absorbant (3) dans une position d'assemblage,
- exposer les éléments complémentaires d'assemblage (2, 3), dans une zone d'assemblage (1), à un rayonnement de traitement (27) pour former un cordon de soudure (4) et, dans une zone de mesure (12) comprenant le cordon de soudure (4), à un rayonnement de mesure (7), et
- détecter le rayonnement de mesure (7), réfléchi par une interface (5) entre le cordon de soudure et l'environnement, à l'aide d'une unité de détection (13),

**caractérisé par**

- une évaluation du rayonnement de mesure (7) détecté au moyen d'une unité d'évaluation (15) reliée à l'unité de détection (13) pour déterminer la position en profondeur de l'interface (5) détectée dans les éléments complémentaires d'assemblage (2, 3).

**12.** Procédé selon la revendication 11, **caractérisé en ce que** le rayonnement de mesure (7) est généré par une source de lumière ponctuelle (6) pouvant être focalisée de manière variable au moyen d'une optique de focalisation (11), la position en profondeur de l'interface (5) étant déterminée par une position (P1, P2, P3), corrélée avec l'intensité du rayonnement de mesure (7) réfléchi, de l'optique de focalisation (11).

13. Procédé selon la revendication 11, **caractérisé en ce que** le rayonnement de mesure (7) est généré au moyen d'une source de lumière ponctuelle (6) polychromatique et est rayonné dans la zone de mesure (12) de manière focalisée de façon dépendante de la longueur d'onde, le rayonnement de mesure (7) réfléchi de manière corrélée avec la position en profondeur de l'interface étant détecté spectralement et la position en profondeur de l'interface (5) étant déterminée par évaluation du maximum d'intensité spectral du rayonnement de mesure (7) réfléchi.

14. Procédé selon la revendication 11, **caractérisé en ce que** le rayonnement de mesure (7) est formé par un faisceau laser de triangulation qui est rayonné dans la zone de mesure (12) et dont le rayonnement de mesure (7) réfléchi de manière dépendante de la position en profondeur de l'interface (5) est détecté par un capteur d'image (29) faisant office d'unité de détection et **en ce que** la position en profondeur de l'interface (5) est déterminée selon le principe de la triangulation laser.

15. Procédé selon la revendication 11, **caractérisé en ce que** le rayonnement de mesure (7) est conçu de manière à générer une ligne de lumière de mesure (33) qui est projetée sur l'interface (5) et dont l'image de mesure réfléchie est détectée comme rayonnement de mesure (7) réfléchi par un capteur à coupe optique (30) faisant office d'unité de détection et **en ce que** la position en profondeur de l'interface (5) est déterminée à partir de celle-ci selon le principe du procédé de coupe optique.

16. Procédé selon l'une des revendications 11 à 15, **caractérisé en ce que** l'exposition de la zone de mesure (12) à un rayonnement secondaire s'effectue lors d'un procédé de soudage hybride par faisceau laser.

Fig. 1

Fig. 2

Fig. 3

Fig. 4

Fig. 6

Fig. 5

Fig. 7

Fig. 8

Fig. 9

EP 2 736 700 B1

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1575756 B1
- DE 102004036576 B4
- DE 10121923 C2